(19) Europäisches Patentamt / European Patent Office / Office européen des brevets

(11) **EP 2 654 378 A2**

(12) **EUROPEAN PATENT APPLICATION**
published in accordance with Art. 153(4) EPC

(43) Date of publication:
**23.10.2013 Bulletin 2013/43**

(51) Int Cl.:
*H05B 37/02* (2006.01)

(21) Application number: **11848580.4**

(22) Date of filing: **13.12.2011**

(86) International application number:
**PCT/KR2011/009560**

(87) International publication number:
**WO 2012/081878 (21.06.2012 Gazette 2012/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.12.2010 KR 20100129538**
**27.12.2010 KR 20100136001**
**25.05.2011 KR 20110049455**

(71) Applicant: **Lee, Dong-Won**
**Gyeonggi-do 440-300 (KR)**

(72) Inventor: **Lee, Dong-Won**
**Gyeonggi-do 440-300 (KR)**

(74) Representative: **Petraz, Gilberto Luigi et al**
**GLP S.r.l.**
**Piazzale Cavedalis 6/2**
**33100 Udine (IT)**

(54) **LED LIGHTING APPARATUS DRIVEN BY ALTERNATING CURRENT**

(57) Disclosed is an AC-driven LED lighting apparatus. The AC-driven LED lighting apparatus comprises a rectifying circuit to rectify an AC voltage to convert the AC voltage to a DC rectified voltage, an LED block serving as a load receiving a current from the rectifying circuit and including at least one LED, a current source to adjust a current supplied to the LED blocks, and a controller to calculate a sinusoidal designed current value based on the AC voltage, to provide the calculated designed current value to the current source, and to perform a control operation to supply only the designed value to the LED blocks by adjusting voltage drop caused at the current source if the current supplied to the LED blocks is greater than the designed current value. The designed current is changed if the AC voltage is changed, so that the brightness of the LED lighting apparatus is constantly maintained.

[Fig. 4]

EP 2 654 378 A2

**Description**

[Technical Field]

The present invention relates to a lighting apparatus employing an LED. In more particular, the present invention relates to an AC-driven LED lighting apparatus which can constantly maintain the brightness of light by turning on LED blocks using constant current regardless of the intensity of AC input voltage, can reduce power consumption by preventing overcurrent from being supplied, and can increase the lifespan of an LED lighting apparatus by reducing heat emitted from the LED lighting apparatus.

[Background Art]

Light emitting diodes (LEDs) are photoelectric conversion semiconductor devices to emit light if current flows. The light emitting diodes have been extensively used for the backlight of a display. With the advance of a technology, the LEDs represent more improved photoelectric conversion efficiency than that of conventional lamps such as a fluorescent lamp and an incandescent lamp. Therefore, recently, the use range of the LEDs is expanded to general lighting devices.

However, in the LED, even if voltage slightly fluctuates, current greatly varies. Accordingly, current must be accurately controlled.

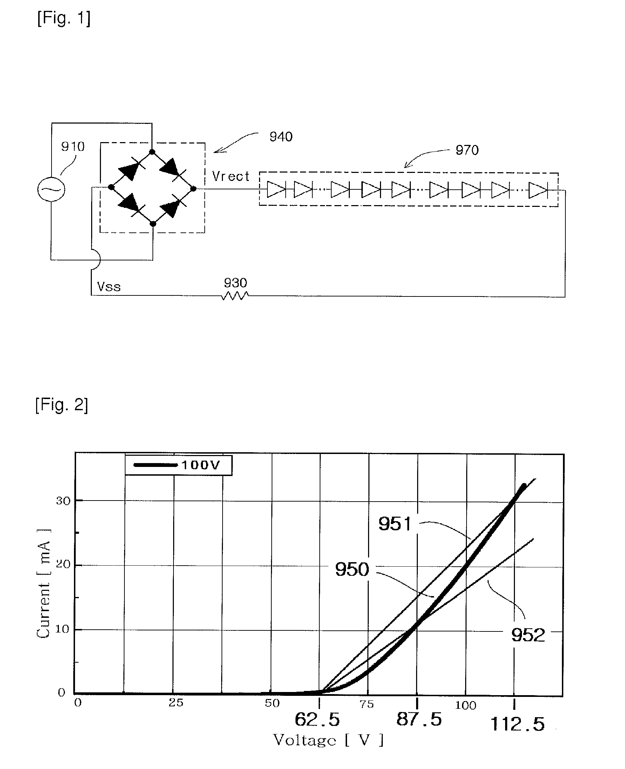

As shown in FIG. 1, an LED lighting apparatus according to the related art includes an AC power supply 910 to supply AC voltage, a rectifying circuit 940 to convert the AC voltage received from the AC power supply 910 to DC rectified voltage Vrect, an LED block 970 driven by the rectified voltage Vrect, which is output voltage of the rectifying circuit 940, and a resistor 930 used to set a current slope of the LED block 910.

However, according to the LED lighting apparatus of the related art, if the AC input voltage is increased, current flowing through the LED block 970 is continuously increased, so that the power consumption is increased, and heat is emitted in large quantities. Accordingly, the characteristic of the LED device may be degraded.

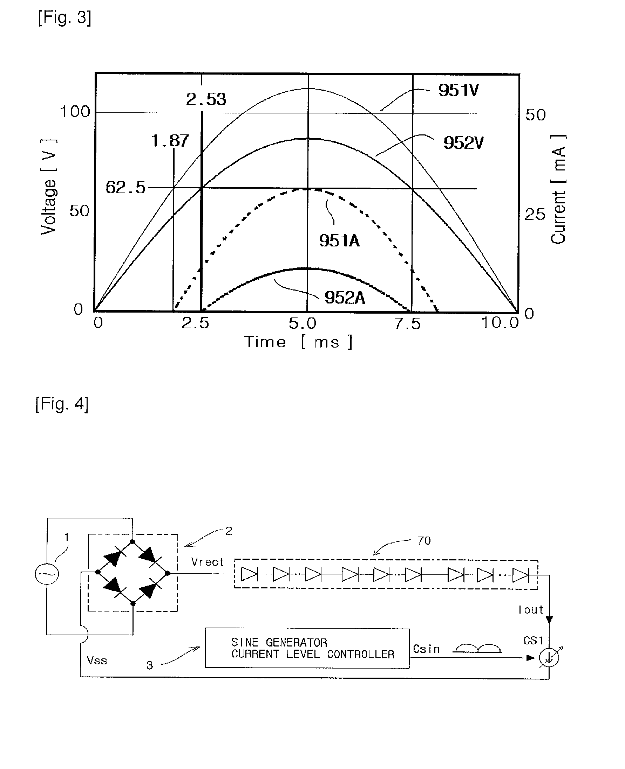

Hereinafter, the problems of the related art will be described with reference to FIGS. 2 and 3.

A voltage-current characteristic curve 950 of FIG. 2 represents a predetermined characteristic curve of the LED block 970 configured by arranging a plurality of LEDs in series. According to the voltage-current characteristic curve 950, threshold voltage at which current starts to flow is 62.5V.

First and second linear models 951 and 952 are obtained by simply modeling the voltage-current characteristic curve 950 in a linear form. Among them, the first linear model 951 is available for modeling when the rectified voltage Vrect fluctuates in the range of 0V to 112.5V. According to the first linear model 951, current has the intensity of 0mA at the voltage of 62.5V, and flows with the intensity of 31mA at the voltage of 112.5V

In addition, the second linear model 952 is available for modeling when the rectified voltage Vrect fluctuates in the range of 0V to 87.5V. According to the second linear model 952, current has the intensity of 0 mA at the voltage of 62.5V, and flows with the intensity of 11mA at the voltage of 87.5V.

FIG. 3 is a graph showing the first and second linear models 951 and 952 when the power frequency is 50Hz.

When the first linear model 951 employs the maximum rectified voltage Vrect of 112. 5V, the rectified voltage Vrect represents a voltage waveform 951V, and rectified current represents a current waveform 951A. In addition, when the second linear model 952 employs the maximum rectified voltage of 87.5V, the rectified voltage Vrect represents a voltage waveform 952V, and rectified current represents a current waveform 952A.

In this case, if the same LED block 970 is used, the LED block 970 has the same threshold voltage of 62.5 V regardless of the intensity of the rectified voltage Vrect. The time to start turning on the LED block 970 is more advanced as the effective value (rms, root mean square) of the rectified voltage Vrect is increased, so that the turning-on maintenance time of the LED block 970 is increased.

For example, when the power frequency is 50Hz, if the times, at which the threshold value of the LED block 970 becomes 62.5V, are measured with respect to the maximum rectified voltages of 87.5V and 112.5V, respectively, the times become 2.53 ms and 1.87 ms, respectively. Accordingly, if the effective value of the rectified voltages Vrect is increased, the time to start turning on the LED block 970 is more advanced.

In addition, the currents flowing through the LED block 970 at the rectified voltage phase of 90° are 11mA and 31mA in the first and second models, respectively, so that the quantity of current flowing at the same time point is more increased when the rectified voltage Vrect has a high effective value.

In summary of the description of FIG. 3, if the rectified voltage Vrect has a higher effective value, the time to start turning on a LED light emitting module is more advanced, so that the turning-on maintenance time of the LED light emitting module is more increased, and the quantity of current flowing at the same time point is more increased. In other words, if the effective value of the rectified voltage Vrect is changed, load current is changed together, so that the brightness of an LED lighting apparatus is changed. When the rectified voltage higher than designed voltage is applied, since an overcurrent protection circuit is not provided, the LED light emitting module serving as a load may be damaged due to the overcurrent.

[Disclosure]

[Technical Problem]

The present invention has been made to solve the problems of the related art, and an object of the present invention is to provide an LED lighting apparatus capable of constantly maintaining the brightness of light regardless of the fluctuation of AC input voltage, and to provide a protective circuit capable of protecting the LED lighting apparatus by cutting off current flowing through the LED lighting apparatus when AC input voltage higher than designed voltage is applied.

[Technical Solution]

To this end, according to the present invention, there is provided an AC-driven LED lighting apparatus. The AC-driven LED lighting apparatus includes a rectifying circuit to rectify an AC voltage to convert the AC voltage to a DC rectified voltage, an LED block serving as a load receiving a current from the rectifying circuit and including at least one LED, a current source to adjust a current supplied to the LED blocks, and a controller to calculate a sinusoidal designed current value based on the AC voltage, to provide the calculated designed current value to the current source, and to perform a control operation to supply only the designed value to the LED blocks by adjusting voltage drop caused at the current source if the current supplied to the LED blocks is greater than the designed current value.

In this case, preferably, the current source controlled by the controller supplies all of the current supplied to the LED blocks to the LED blocks without the voltage drop  caused at the current source if the current supplied to the LED blocks is smaller than the designed current value.

In addition, further, preferably, the controller calculates the sinusoidal designed current value by using a sinusoidal signal in phase with the AC voltage.

In addition, preferably, a plurality of LED blocks are connected in series. The AC-driven LED lighting apparatus further includes a switch block including at least one switch connected to the LED blocks in series or in parallel to adjust the number of the series-connected LED blocks to be turned on by changing flow of current flowing through the series-connected LED blocks through an on/off operation of the switch. The controller controls the on/off operation of the switch to turn on a large number of the LED blocks if an instantaneous rectification input supplied to the LED blocks has a high value, and to turn on a small number of the LED blocks if the instantaneous rectification input supplied to the LED blocks has a low value.

In addition, preferably, the controller performs a control operation to alternately turn on the LED blocks as required among the plural LED blocks.

Further, preferably, the controller controls the switch block to turn on the LED blocks in a sequence from the LED blocks provided at one side to the LED blocks at an opposite side at an odd- numbered rectification cycle of rectification input supplied to the LED blocks, and to turn on the LED blocks in a sequence from the LED blocks provided at the opposite side to the LED blocks provided at the one side, which is reverse to the sequence which is set at the odd- numbered rectification cycle, at an even- numbered rectification cycle.

In addition, preferably, the controller controls the switch block to set the LED block, which is turned on at a previous rectification cycle of rectification input supplied to the LED blocks, to a last LED block (Rotate Left) and to turn on the LED blocks in a sequence set through the Rotate Left at a next rectification cycle, or controls the switch block to set the LED block, which is lastly turned on at the previous rectification cycle of the rectification input supplied to the LED blocks, to a first LED block (Rotate Right) and to turn on the LED blocks in a sequence set through the Rotate Right at the next rectification cycle.

Meanwhile, according to another embodiment of the present invention, there is provided an AC- driven LED lighting apparatus including a rectifying circuit to rectify an AC voltage to convert the AC voltage to a DC rectified voltage, a plurality of LED  blocks serving as a load receiving a current from the rectifying circuit, having at least one LED, and connected to each other in series, at least one switch connected to the LED blocks in parallel, a switch block adjusting the number of the series- connected LED blocks to be turned on by changing flow of current flowing through the series-connected LED blocks through an on/off operation of the switch, and a controller controlling the on/off operation of the switch to turn on a large number of the LED blocks if an instantaneous rectification input supplied to the LED blocks has a high value, and to turn on a small number of the LED blocks if the instantaneous rectification input supplied to the LED blocks has a low value. The controller performs a control operation to alternately turn on the LED blocks as required among the plural LED blocks.

[Advantageous Effects]

As described above, according to the AC-driven LED lighting apparatus of the present invention, when AC voltage is increased, the current of the LED block can adjusted (reduced) by improving the structure of the related art in which a larger quantity of current flows, so that current the same as previous-state current can constantly flow.

Therefore, according to the AC- driven LED lighting apparatus of the present invention, the brightness of light can be constantly maintained by turning on the LED block using constant current regardless of the intensity of the AC input voltage, power consumption can be reduced by preventing overcurrent from being supplied, and the lifespan of the LED lighting apparatus can be increased by reducing heat emitted from the LED lighting apparatus.

[Description of Drawings]

FIG. 1 is a circuit diagram showing an LED light emitting apparatus according to the related art.

FIG. 2 is a graph showing a voltage-current characteristic curve according to the related art.

FIG. 3 is a graph showing a current waveform as a function of time according to the related art.

FIG. 4 is a circuit diagram showing an LED lighting apparatus according to the first embodiment of the present invention.

FIG. 5 is a circuit diagram showing a current source suitable for the present invention.

FIG. 6 is a graph showing the characteristic curve of a current source suitable for the present invention.

FIG. 7 is a graph showing a current waveform at low AC voltage according to the first embodiment of the present invention.

FIG. 8 is a graph showing a current waveform at high AC voltage according to the first embodiment of the present invention.

FIG. 9 is a circuit diagram showing an LED lighting apparatus suitable for the second embodiment of the present invention.

FIG. 10 is a graph showing a voltage-current characteristic curve of a light emitting block suitable for the present invention.

FIG. 11 is a graph showing a current waveform at low AC voltage according to the present invention.

FIG. 12 is a graph showing a current waveform at high AC voltage according to the second embodiment of the present invention.

FIG. 13 is a graph showing another current waveform at the high AC voltage according to the second embodiment of the present invention.

FIG. 14 is a circuit diagram showing another LED lighting apparatus suitable for the second embodiment of the present invention.

FIG. 15 is a circuit diagram showing an LED lighting apparatus according to the third embodiment of the present invention.

FIG. 16 is a graph showing one example of an LED linear model used in the third embodiment of the present invention.

FIG. 17 is a graph showing one example of a current waveform of an AC power supply according to the present invention.

FIG. 18 illustrates graphs showing one example of a current waveform of each light emitting block according to the present invention.

[Best Mode]

[Mode for Invention]

Hereinafter, exemplary embodiments of the present invention will be described in detail with reference to accompanying drawings. In this case, the same elements will be assigned with the same reference numerals in drawings.

Terms and words used in the specification and the claims shall not be interpreted as commonly-used dictionary meanings, but shall be interpreted as to be relevant to the technical scope of the invention based on the fact that the inventor may properly define the concept of the terms to explain the invention in best ways. In addition, the details of the components and the functions making the subject matter of the present invention unclear will be omitted.

Regarding the core concept of the present invention, if a controller sends a control signal to a current source to supply sinusoidal current (having in phase with of rectified voltage) to a load, and if the current source has a condition of supplying a required quantity of current (if current flows in a sufficient quantity through a circuit, so that the quantity of the current is reduced), the current source causes voltage drops at both terminals thereof to reduce the voltage across the both terminals of the load, so current flows at a required level through the load.

On contrast, if the current source has no condition of supplying the required quantity of the current (the current flowing through the circuit is lower than the required current) the voltage across the both terminals of the current source is minimized (current source saturation voltage), so that the current can flow through the circuit as much as possible.

In other words, if the maximum rectified voltage is supplied higher than designed voltage, redundancy voltage is applied to the both terminals of the current source, and the designed voltage is applied to the both terminals of the load, so that the maximum current of the load is restricted by the current source.

Embodiment 1

Hereinafter, an AC- driven LED lighting apparatus according to the first embodiment of the present invention will be described with reference to FIGS. 4 to 8.

FIG. 4 is a circuit diagram showing the AC-driven LED light emitting apparatus according to the first embodiment of the present invention.

Hereinafter, a circuit configuration will be described with reference to FIG. 4. The present invention includes an AC power supply 1, a rectifying circuit 2, an LED block 70 serving as a load, a current source CS1, and a controller 3. The LED block 70 is connected with the current source CS1 in series.

In this case, the LED block 70 includes at least one LED or a plurality of LEDs may be arranged in a series-connection configuration, a parallel-connection configuration, or a series/parallel-connection configuration. Since the LED block 70 is generally known to those skilled in the art, the details thereof will be omitted below for clarity.

In addition, preferably, the controller 3 generates a sinusoidal signal in phase with the AC voltage, rectifies the sinusoidal signal (converts negative voltage to positive voltage), generates a current quantity adjusting signal Csin by adjusting the magnitude of the rectified sinusoidal signal, and supplies the adjusting signal Csin to the current source CS 1.

The controller 3 generates the sinusoidal wave in phase with the AC voltage because AC current supplied from the AC power supply 1 must be in phase with the AC voltage, and the waveform of the AC current must represent the sinusoidal waveform, so that the power factor can be improved. Naturally, load current flowing through the load is obtained by rectifying the AC current.

If the current source CS1 has a condition of supplying current corresponding to the adjusting signal Csin sent from the controller 3 (if the sufficient quantity of current flows through the load), voltage drop is caused at the both terminals of the current source CS1, and the voltage across the both terminals of the LED block 70 serving as the load is reduced, thereby allowing load current to flow at a required level. If the current source CS1 has no condition of supplying the current (that is, if the quantity of the current applied to the load is lower than the required quantity of current), the voltage across the both terminals of the current source CS1 is minimized (current source saturation voltage), so that the maximum current can flow through the load.

In other words, preferably, if the rectified voltage is higher than designed voltage, redundancy voltage is applied to the both terminals of the current source CS1, and the designed voltage is applied to the load 70, thereby preferably restricting the load current by the current source CS 1.

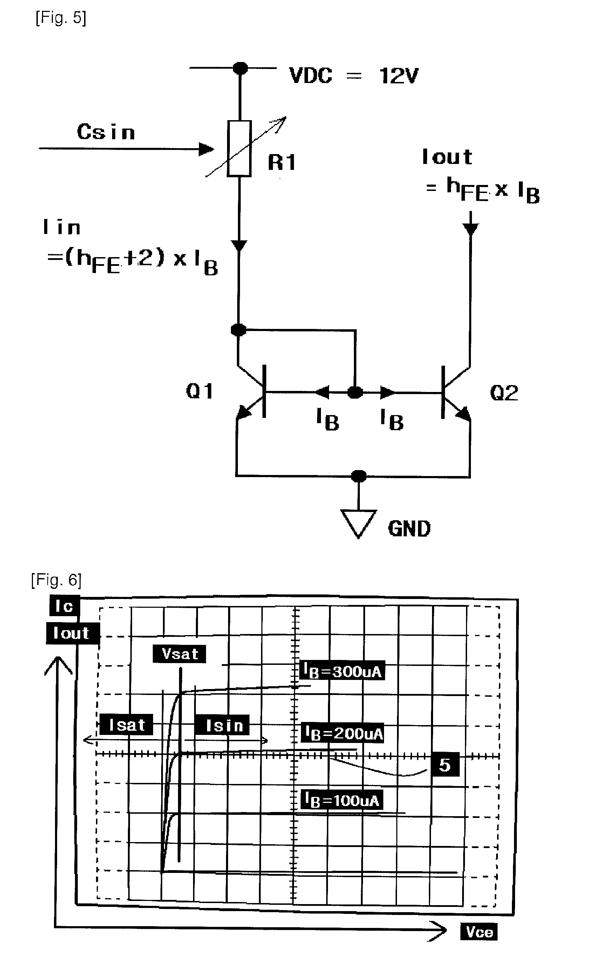

Hereinafter, one example of a current source circuit suitable for the present invention will be described with reference to FIG. 5.

Hereinafter, a circuit configuration of the current source CS1 will be described. The circuit configuration of the current source CS1 includes a DC power supply VDC, an input terminal to receive the control signal Csin from the controller 3, a variable resistor R1, and the first and second transistors Q1 and Q2 having the same electrical characteristic.

In addition, regarding the circuit connection of the current source CS1, the bases of the first and second transistors Q1 and Q2 are connected to each other in common. In this state, the collector of the first transistor Q1 is connected to the common base. Simultaneously, the collector of the first transistor Q1 is connected to the DC power supply VDC though the variable resistor R1.

In addition, the emitters of the first and second transistors Q1 and Q2 are connected to the ground, and the collector of the second transistor Q2 is open. The open collector of the second transistor Q2 is connected to the terminal of the rectified voltage Vrect by the LED light emitting module 70 serving as the load.

In this case, naturally, the emitter of the second transistor Q2 is connected to the ground terminal Vss of two terminals of the current source CS1 shown in FIG. 4, and the collector of the second transistor Q2 is connected to the remaining terminal of the current source CS1 shown in FIG. 4.

In addition, adjusting current Iin flowing through a variable resistor R1 is obtained by dividing voltage, which is obtained by subtracting the DC voltage VDC from the collector-emitter voltage Vce (Q1) of the first transistor Q1, by the resistance of the variable resistor R1. In addition, the adjusting current Iin is obtained as the sum of collector current Ic (Q1) of the first transistor Q1, base current $I_B$ (Q1) of the first transistor Q1, and base current $I_B$ (Q2) of the second transistor Q2, and expressed through Equation 1.

## Equation 1

$$I_{in} = I_c(Q1) + I_B(Q1) + I_B(Q2)$$

In addition, if the first and second transistors Q1 and Q2 have the same electrical characteristic, the two transistors Q1 and Q2 have the same base current (hereinafter, the base current is expressed as $I_B$ without distinguishing between the transistors).

The collector current Ic (Q1) of the first transistor Q1 is the product of the base current $I_B$ of the first transistor Q1 and a current amplification factor $h_{FE}$. Accordingly, if Equation 1 is summarized by using the product, Equation 2 is obtained.

## Equation 2

$$I_{in} = (h_{FE} \times I_B) + I_B + I_B$$
$$= I_B(h_{FE} + 2) \times I_B$$

In addition, since the output current Iout of the current source CS1 serves as the collector current of the second transistor Q2, the output current Iout is the product of the base current $I_B$ and the current amplification factor $h_{FE}$, and expressed through Equation 3.

## Equation 3

$$I_{out} = h_{FE} \times I_B$$

Accordingly, if the adjusting current Iin is adjusted by varying the resistance of the variable resistor R1, the output current Iout of the current source CS1 is adjusted, so that the current source suitable for the present invention can be formed. In this case, if the effective value of the adjusting current Iin is changed, the effective value of the output current Iout of the current source CS1 is changed together.

Hereinafter, the voltage- current characteristic curve of the second output transistor Q2 of the current source CS1 will be described with reference to FIG. 6. Regarding a characteristic curve 5, the base current $I_B$ is 200uA. If the collector- emitter voltage Vce of the second transistor Q2 is equal to or greater than the saturation voltage Vsat of the second transistor Q2, constant collector current Ic flows corresponding to the base current $I_B$ regardless of the voltage. If the voltage Vce is less than the saturation voltage Vsat, saturation current Isat flows in which current is rapidly reduced to 0.

That is to say, the function of the second transistor Q2 of the current source CS1 will be described below according to the object of the present invention. In the state that the controller 3 sets the sinusoidal required current Isin (that is, appropriate current to turn on the LED block (designed current)), if the output voltage Vce (Q2) across the both terminals of the second transistor Q2 is greater than the saturation voltage Vsat, the current source CS1 supplies the designed current (Isin) (redundancy voltage is applied to both terminals of the current source). Otherwise, the current source CS1 supplies the saturation current Isat of the transistor.

In other words, if the load current is higher than the designed current Isin, the current source CS1 causes voltage drop at both terminals thereof to reduce the voltage across the both terminals of the load so that the load current is matched with the designed current Isin. However, if the load current is lower than the designed current Isin, the voltage across the both terminals of the current source CS1 is reduced (to less than the saturation voltage Vsat) as much as possible, so that the whole voltage is applied to the load. Accordingly, the load current flows as it is.

Although the description has been made in that a bipolar transistor serving as a current-driven device is used as one example of the current source suitable for the present invention, the current source suitable for the present invention may include an MOSFET serving as a voltage-driven device. In addition, naturally, the current source may include various modifications such as a Widlar current source, a Wilson current source, and a voltage-current converter.

[Case I: Load current < designed current]

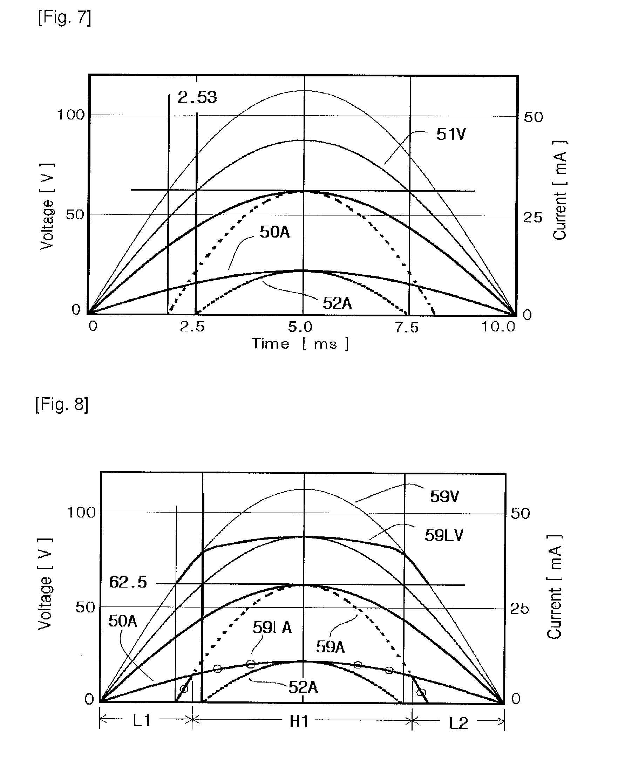

Hereinafter, a case that the power frequency is 50Hz according to one embodiment of the present invention will be described with reference to FIG. 7.

A current waveform 50A represents a desirable sinusoidal designed current Isin to be supplied to the load from the current source CS1 according to the sinusoidal control signal Csin received from the controller 3 according to the present invention. In this case, naturally, the designed current (50A) is in phase with the rectified voltage Vrect and represents the rectified sinusoidal waveform.

In addition, a current waveform 52A represents a waveform the same as the waveform 952A of the load current shown in FIG. 3 according to the related art. The current waveform 52A is calculated based on the maximum rectified voltage of 87.5V and the linear model 952.

Since the waveform 52A of the load current is lower than the waveform 50A of the designed current in the entire time domain, the current source CS1 operates in the saturation region, and the current flowing through the current source CS1 is matched with the load current. In other words, although the designed current is set to a high intensity as shown in the waveform 50A, the current of the current source CS1 actually flows with a lower intensity than that of the designed current 50A to be equal to the load current 52A.

[Case II: Load Current > Designed Current]

Hereinafter, the case that the power frequency is 50Hz according to one embodiment of the present invention will be described with reference to FIG. 8.

The current waveform 50A represents the desirable sinusoidal designed current Isin to be supplied to the load from the current source CS1 according to the sinusoidal control signal Csin received from the controller 3 according to the present invention. In this case, the designed current 50A is in phase with the rectified voltage Vrect and represents the rectified sinusoidal waveform.

In addition, a waveform 59A of the load current is the same as the current waveform 951A shown in FIG. 3 according to the related art. The waveform 59A of the load current is calculated based on the linear model 951 when the maximum rectified voltage is 112.5V (see the voltage waveform 59V), and the power frequency is 50Hz.

According to the preset invention, the designed current is represented in the waveform 50A, and the current passing through the current source CS1 is represented in a waveform 59LA. Although the voltage across the both terminals of the load according to the related art is represented in the waveform 59V, the voltage across the both terminals of the load according to the present invention is represented in a waveform 59LV. The difference in voltage between the voltage waveforms 59V and 59LV is applied to both terminals of the current source CS 1.

In other words, since the above load current 59A is lower than the designed current 50A during periods L1 and L2, the current flowing through the current source CS1 becomes equal to the above load current. However, since the above load current 59A is higher than the designed current during the period H1, voltage drop is caused at the current source CS1, and voltage at the both terminals of the LED block 70 serving as a load is reduced. Accordingly, the current flowing through the current source CS1 becomes equal to the designed current 50A in period H1.

In this case, when comparing the rectified current 52A based on the maximum rectified voltage of 87.5V, with the rectified current 59LA based on the maximum rectified voltage of 112. 5V, the higher maximum rectified voltage allows the time to start turning on the LED block 970 to be more advanced, so that the power factor can be improved, and the time period of current flowing can more increased. In addition, in the case of the higher maximum rectified voltage, current flows in larger quantity at the same time point.

Therefore, preferably, according to the present invention, if the maximum rectified voltage becomes higher than the designed reference voltage, then the effective value of the designed current is lowered (that is, the designed current of the current source is lowered), so the total quantity of current (total quantity of electrons) flowing through the LED block, which serves as a load, in one cycle of the rectified voltage is equal to the total quantity of current at the designed voltage.

In this case, even if the maximum rectified voltage higher than the designed voltage is supplied, the brightness of the LED block serving as a load is equal to the brightness of the LED block at the designed rectified voltage, the power consumption in the load and the current source is reduced, and heat is less emitted, thereby making an effect of protecting the load and the current source. Accordingly, preferably, the effective value of the designed current for the current source can be adjusted corresponding to the effective value of the AC input voltage.

As described above, the first embodiment of the present invention has been described in detail. According to the present embodiment, naturally, the rectifying circuit, the current source, the controller, and the switch, which are described in detail, can be manufactured in one semiconductor device.

Regarding the core concept of the present invention again, the controller 3 sets the sinusoidal designed current Isin in phase with the AC voltage. The current source CS1 causes the voltage drop at the both terminals thereof when the load current is higher than the designed current Isin, thereby reducing the voltage across the both terminals of the load, so that the load current is matched with the designed current.

On the contrary, when the load current is lower than the designed current Isin, the voltage across the both terminals of the current source CS1 is lowered as much as possible (lowered to the saturation voltage Vsat or less), so that the whole rectified voltage Vrect is applied to the load, thereby allowing the load current to flow.

Embodiment 2

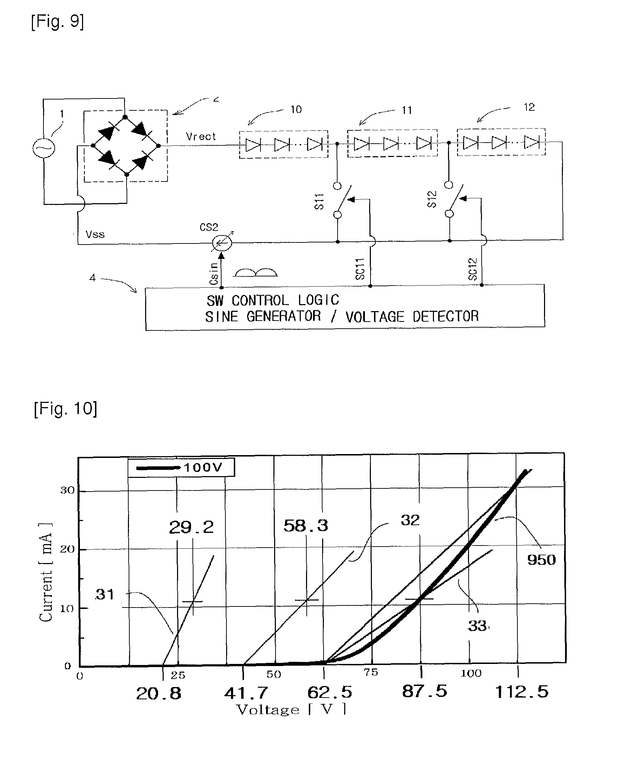

Hereinafter, an LED lighting apparatus according to the second embodiment of the present invention will be described with reference to FIGS. 9 to 14.

Unlike the LED block 70 serving as the load according to the first embodiment of the present invention, according to the present embodiment, an LED block includes a plurality of sub-light emitting blocks 10, 11, and 12 connected in series. Accordingly, a small number of sub-light emitting blocks are driven at the low instantaneous rectified voltage, and a large number of sub-light emitting blocks are driven at the high instantaneous rectified voltage, so that the whole turning-on maintenance time of the LED block can be increased.

According to the effects of the present embodiment, since the turning-on maintenance time is increased in the unit rectifying period (that is, the turning-off maintenance time is reduced), the flickering phenomenon of light can be reduced, and the power factor can be improved. When the brightness equal to that of the related art is realized, load current can be reduced at the maximum rectified voltage, so that the power consumption and the amount of emitted heat can be reduced in the light emitting block serving as the load and the current source.

FIG. 9 is a circuit diagram showing a circuit having a parallel-switch configuration suitable for the present invention.

Hereinafter, the circuit configuration will be described with reference to FIG. 9. The circuit configuration includes an AC power supply 1, a rectifying circuit 2, the first to third light emitting blocks 10, 11, and 12, which serve as a load, a current source CS2, and a controller 4. In this case, the first to third light emitting blocks 10 to 12 and the current source CS2 are connected in series.

The circuit configuration includes the first and second switches S11 and S12 to adjust the number of the light emitting blocks 10, 11, and 12 to be turned on. The first switch S11 is installed between the output terminal of the first light emitting block 10 and the input terminal of the current source CS2. The second switch S12 is installed between the output terminal of the second light emitting block 11 and the input terminal of the current source CS2.

Preferably, the first to third light emitting blocks 10 to 12 may include at least one LED or a plurality of LEDs may be arranged in a series- connection configuration, a parallel- connection configuration, or a series/ parallel- connection configuration. Since the light emitting blocks 10, 11, and 12 are generally known to those skilled in the art, the details thereof will be omitted below for clarity.

In addition, the controller 4 generates a sinusoidal signal in phase with AC voltage, rectifies the sinusoidal signal (converts negative voltage to positive voltage), generates a current quantity adjusting signal Csin by adjusting the magnitude of the rectified sinusoidal signal, and supplies the adjusting signal Csin to the current source CS2. In addition, preferably, the controller 4 generates the first and second switch control signals SC11 and SC12 to control the first and second switches S11 and S12, respectively, by measuring instantaneous rectified voltage.

If the current source CS2 has a condition of supplying current corresponding to the adjusting signal Csin sent from the controller 4 (if the sufficient quantity of current flows through the load), voltage drop is caused at the both terminals of the current source CS2, and the voltage across the both terminals of the load is reduced, thereby allowing load current to flow at a required level. If the current source CS2 has no condition of supplying current (that is, if the quantity of current applied to the load is lower than the required quantity of current), the voltage across both terminals of the current source CS2 is minimized (current source saturation voltage), so that the maximum current can flow through the load.

In other words, preferably, if the rectified voltage is higher than the designed voltage, redundancy voltage is applied to both terminals of the current source CS2, and the designed voltage is applied to the load, thereby preferably restricting the maximum load current by the current source CS2.

Hereinafter, the characteristic of the light emitting block according to the present embodiment will be described with reference to FIG. 10.

A characteristic curve 950 is the same as that of the light emitting block 70 according to the first embodiment of the present invention, which has been described with reference to FIG. 2. The characteristic curve 950 according to the present embodiment corresponds to the case that the three sub-light emitting blocks 10, 11, and 12, that is, the first to third light emitting blocks 10 to 12 are connected in series. In this case, naturally, the first and second switches S11 and S12 of FIG. 9 must be disconnected.

In addition, a third linear model 33 is obtained by linearly modeling the characteristic curve 950 through a simple scheme, and occupies the duration of the rectified voltage Vrect in the range of 0V to 87.5. It can be recognized from the third linear model 33 that current is 0mA at the voltage of 62.5V, and the current is 11 mA at the voltage of 87.5V.

In addition, a second linear model 32 is obtained by dividing the light emitting block 70 of the previous embodiment into three equal parts, and connecting two light emitting blocks in series among the three equal parts. In other words, the first and second light emitting blocks 10 and 11 are turned on and the third light emitting block 12 is turned off.

In this case, naturally, the controller 4 must operate in such a manner that the first switch S11 is disconnected, and the second switch S12 is conduced to bypass the third light emitting block 12. Since the equivalent series resistance of the light emitting blocks 10 and 11 is 2/3 of the equivalent series resistance of the previous embodiment, the threshold voltage becomes 41.7V corresponding to 2/3 of the light emitting block 70 of the previous embodiment.

In addition, the light emitting block 70 of the previous embodiment allows current to flow with the intensity of 11mA when the voltage of 25V is increased from the threshold voltage. However, when two light emitting blocks 10 and 11 are connected in series, the current of 11mA flows at the voltage of 58.3V obtained by increasing 16.67V, which is 2/3 of 25V, from the threshold voltage. Accordingly, on the assumption that the light emitting block 70 of the previous embodiment is based on the linear model 33, if the case that the light emitting block 70 is uniformly divided into three equal parts and two light emitting blocks are connected in series is linearly modeled, the second linear model 32 is obtained.

In addition, a first linear model 31 is obtained by dividing the light emitting block 70 of the previous embodiment into three equal parts and then turning on only one light emitting block among the three equal parts. In other words, the first light emitting block 10 is turned on, and the second and third light emitting blocks 11 and 12 are turned off. In this case, naturally, the controller 4 must operate in such a manner that the first switch S11 is conducted regardless of the state of the second switch S 12 to bypass the second and third light emitting blocks 11 and 12.

In addition, since the equivalent series resistance of the light emitting block 10 becomes 1/3 of the equivalent series resistance of the previous embodiment, the threshold voltage becomes 20.8V corresponding 1/3 of the threshold voltage of the light emitting block 70 according to the previous embodiment. According to the light emitting block 70 of the previous embodiment, current of 11mA flows when the voltage of 25V is increased from the threshold voltage. However, when only one light emitting block 10 is turned on, the current of 11mA flows at the voltage of 29.2V obtained by increasing the voltage of 8.3V, which is 1/3 of the voltage of 25V, from the threshold voltage. Accordingly, on the assumption that the light emitting block 70 of the previous embodiment is based on the linear model 33, if the case that the light emitting block 70 is uniformly divided into three equal parts and only one light emitting block 10 is turned on is linearly modeled, the first linear model 31 is obtained.

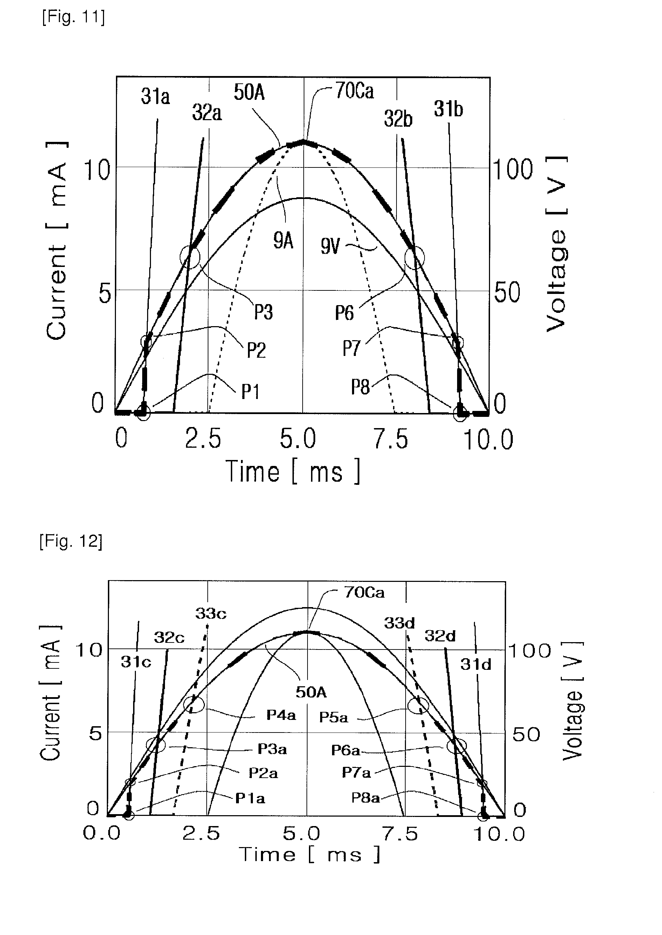

Hereinafter, description will be made with reference to FIG. 11.

FIG. 11 illustrates the case that the first to third linear models 31 to 33 are used, the power frequency is 50Hz, and the maximum rectified voltage is 87.5V in the circuit of FIG. 9.

The rectified voltage Vrect is represented in a voltage waveform 9V. When the light emitting block 70 of the previous embodiment is driven, the current waveform is represented in a waveform 9A. In addition, waveforms 31a and 31 b represent load current related to the rectified voltage Vrect by using the first linear model 31. Similarly, waveforms 32a and 32b represent load current related to the rectified voltage Vrect by using the second linear model 32.

A sinusoidal designed current provided to the current source CS2 as a control signal is represented in the waveform in which the maximum instantaneous current is 11mA (see 50a, block color line). When the switches are properly adjusted by the controller 4, the rectified current is represented in the waveform (70Ca, red color line).

Hereinafter, the description according to periods will be made with reference to Table 1.

[Table 1]

| Period | Turning-on Block | Switch Setting | Remark |
|---|---|---|---|
| Oms~P1 | whole block: turned off | S11: conducted S11: irrelevance | less than B1's threshold voltage |
| ~P2 | B1: turned on | S11: conducted S12: irrelevance | |
| ~P3 | B1: turned on | S11: conducted S12: irrelevance | switching is performed at P3 |
| ~P6 | B1, B2: turned on | S11: dis-connected S12: conducted | switching is performed at P6 |
| ~P7 | B1: turned on | S11: conducted S12: irrelevance | |
| ~P8 | B1: turned on | S11: conducted S12: irrelevance | |
| ~10ms | whole block: turned off | S11: conducted S12: irrelevance | less than B1's threshold voltage |

In table 1, B1 represents the first light emitting block 10, and B2 represents the second light emitting block 11.

First, P1 represents a time point at which the rectified voltage Vrect is raised through the threshold voltage of the first light emitting block 10, P2 represents a time point at which the current waveform 31a based on the first linear model 31 crosses the designed current waveform 50A, and P3 represents a time point at which the current waveform 32a based on the second linear model 32 crosses the designed current waveform 50A. P6 represents a time point at which the current waveform 32b based on the second linear model 32 crosses the designed current waveform 50A, P7 represents a time point at which the current waveform 31b based on the first linear model 31 crosses the designed current waveform 50A, and P8 represents a time point at which the rectified voltage Vrect is dropped to pass through the threshold voltage of the first light emitting block 10.

In this case, the period between 0ms to P1 refers to a period at which the voltage of the first light emitting block 10 is equal to or less than the threshold voltage so that whole light emitting blocks are turned off.

In addition, the period from the time point P1 to less than the time point P2 refers to a period at which the first light emitting block 10 is turned on based on the first linear model 31, and the current source CS2 operates in the saturation region so that the voltage across the current source CS2 approximates zero volte.

In addition, the period from the time point P2 to less than the time point P3 refers to a period at which the first light emitting block 10 is turned on based on the first linear model 31, and voltage drop is caused at the current source CS2 to adjust the voltage of the load so that the designed current 50A is supplied to the load. Further, during the period, as time is increased, the voltage drop at the current source CS2 is continuously increased.

Preferably, the P3 is a time point at which switching is performed so that one light emitting block is additionally turned on. In other words, the P3 is a time point at which the first and second light emitting blocks 10 and 11 are turned on. Regarding the determination criterion of a switching operation, the controller 4 preferably performs the switching operation when model current is greater than the designed current after comparing 1) the designed current with 2) the model current (the current on a linear model under present rectified voltage when one light emitting block is additionally provided; hereinafter, referred to as "model current") at present time (switch control rule when the rectified voltage is increased) .

Before the switching is performed, the voltage drop at the current source CS2 is greatly caused (substantially, "threshold voltage after the switching has been performed"-"threshold voltage before the switching is performed"). On contrast, after the switching has been performed, the voltage at the current source CS2 is dropped approximately to the saturation voltage Vsat.

Further, the model current may be found by using a multidimensional function in addition to the linear model. Naturally, the model current may be found in a table of current- voltage measurement values of a real circuit (including a switch), which is previously stored in a memory.

A period from the time point P3 to a time point, at which the voltage phase becomes 90°, is a period in which the light emitting block is turned on based on the second linear model 32, which is the combination model of the first and second light emitting blocks 10 and 11, and the voltage drop is caused at the current source CS2 to adjust the voltage of the load so that the designed current 50A is supplied to the load.

During the above period, although the controller 4 is trying to perform a switching operation when the model current 9A is greater than the designed current after comparing 1) the designed current with 2) the model current 9A at each time, the model current is not greater than the designed current. Accordingly, the switching is not performed any more, and the raising of the rectified voltage is terminated. In addition, even during the above period, as the time is increased, the voltage drop is continuously increased.

A period from the time point, at which the voltage phase becomes 90° to less than the time point P6 is a period in which the light emitting block is turned on based on the second linear model 32 which is the combination of the first and second light emitting blocks 10 and 11, and the voltage drop is caused at the current source CS2 to adjust the voltage of the load, so that the designed current 50A is supplied to the load. In this case, as the time is increased, the voltage drop of the current source CS2 is continuously increased.

During the above period, the controller 4 preferably monitors the voltage at the output terminal of the current source CS2 to control the switch before the voltage at the  output terminal is dropped to the saturated voltage Vsat or less, thereby additionally bypassing one light emitting block and removing the light emitting block from the circuit (switch control rule when the rectified voltage is dropped).

The period between the P6 and P7 is a period at which the first light emitting block 10 is turned on based on the second linear model 32. During the period, the voltage drop is caused at the current source CS2 to adjust the voltage of the load, so that the designed current 50A is supplied to the load. In this case, as the time is increased, the voltage drop of the current source CS2 is continuously decreased.

During the period, since only one light emitting block, that is, only the first light emitting block 10 is turned on, there is no light emitting block to be bypassed, a present switch state is maintained until a next rectifying cycle starts via the time point P8.

Since the LED block is a resistive load, a current-voltage relationship is one-to-one correspondence relationship. Accordingly, the switching time points P3 to P6 may be represented based on switching voltage Vref through "switch control rule when the rectified voltage is raised" and "switch control rule when the rectified voltage is dropped". In other words, after the rectified voltage is compared with the switching voltage Vref that is previously known through the calculation operation, when the rectified voltage is raised or dropped through the switching voltage Vref, the switching is performed, thereby adding or removing the light emitting block.

When the AC voltage is raised so that 1) the effective value of the desired current must be lowered, the switching voltage Vref is preferably changed to a lower value (if the current is lowered in the LED, voltage is lowered). In addition, since 2) the time of the AC voltage passes through the preset switching voltage Vref is more advanced (that is, even the instantaneous desired current is lowered), even if the effective value of the desired current is not lowered, the switching voltage Vref is preferably changed to a lower value. However, preferably, 3) the switching voltage Vref may not be changed when taking the cost-to-effect into consideration. Although this case represents lower light efficiency as compared with the light efficiency in the case that the switching voltage Vref is changed, this case naturally represents higher light efficiency as compared with the light efficiency in the related art.

As described above, the case that the maximum rectified voltage is 87.5V has been described in detail.

Hereinafter, a case that the maximum rectified voltage is 125V will be described.

FIG. 12 illustrates the case that the first to third linear models 31 to 33 are used, the power frequency is 50Hz, and the maximum rectified voltage is 125V in the circuit of FIG. 9 similarly to FIG. 11.

In addition, waveforms 31c and 31d represent load current related to the rectified voltage Vrect by using the first linear model 31. Similarly, the waveforms 32c and 32d represent load current related to the rectified voltage Vrect by using the second linear model 32, and the waveforms 33c and 33d represent load current related to the rectified voltage Vrect by using the third linear model 33. A sinusoidal designed current provided to the current source CS2 as a control signal is represented in the waveform 50A in which the maximum instantaneous current is 11mA. In this case, the rectified current is represented in a waveform 70Ca.

Hereinafter, the description according to periods will be made with reference to Table 2.

[Table 2]

| Period | Turning-on Block | Switch Setting | Remark |
|---|---|---|---|
| Oms~P1 | whole block: turned off | S11: conducted<br>S12: irrelevance | less than B1's threshold voltage |
| ~P2a | B1: turned on | S11: conducted<br>S12: irrelevance | |
| ~P3a | B1: turned on | S11: conducted<br>S12: irrelevance | switching is performed at P3a |
| ~P4a | B1, B2: turned on | S11:dis-connected<br>S12: conducted | switching is performed at P4a |
| ~P5a | B1, B2, B3: turned on | S11:dis-connected<br>S12: dis-connected | switching is performed at P5a |
| ~P6a | B1, B2: turned on | S11:dis-connected<br>S12: conducted | switching is performed at P6a |
| ~P7a | B1: turned on | S11:conducted<br>S12: irrelevance | |
| ~P8a | B1: turned on | S 11: conducted<br>S12: irrelevance | |
| ~10ms | whole block: turned off | S11:conducted<br>S12: irrelevance | less than B1's threshold voltage |

In table 2, B1 represents the first light emitting block 10, B2 represents the second light emitting block 11, and B3 represents the third light emitting block 12.

First, P1a represents a time point at which the rectified voltage Vrect is raised through the threshold voltage of the first light emitting block 10, P2a represents a time point at which a current waveform 31c based on the first linear model 31 crosses the designed current waveform 50A, and P3a represents a time point at which a current waveform 32c based on the second linear model 32 crosses the designed current waveform 50A. P4a is a time point at which a current waveform 33c based on the third linear model 33 crosses the designed current waveform 50A, and P5a is a time point at which a current waveform 33d based on the third linear model 33 crosses the designed current waveform 50A. P6a represents the time point at which the current waveform 32d based on the second linear model 32 crosses the designed current waveform 50A, P7a represents a time point at which the current waveform 31d based on the first linear model 31 crosses the designed current waveform 50A, and P8a represents a time point at which the rectified voltage Vrect is passing through the threshold voltage of the first light emitting block 10.

In this case, the period between 0ms to the time point P1a refers to a period in which the voltage of the first light emitting block 10 is equal to or less than the threshold voltage so that whole light emitting blocks are turned off.

In addition, the period from the time point P1a to less than the time point P2a refers to a period at which the first light emitting block 10 is turned on based on the first linear model 31, and the current source CS2 operates in the saturation region so that the voltage of the current source CS2 approximates zero volte.

In addition, the period from the time point P2a to less than the time point P3a refers to a period at which the first light emitting block 10 is maintained in a turning-on state based on the first linear model 31, and voltage drop is caused at the current source CS2 to adjust the voltage of a load so that the designed current 50A is supplied to the load. Further, during the period, as time is increased, the voltage drop at the current source CS2 is continuously increased.

The P3a is a time point at which switching is performed so that one light emitting block is additionally turned on. In other words, at the time point P3a, the first and second light emitting blocks 10 and 11 are turned on. In this case, the switching is performed in compliance with "switch control rule when the rectified voltage is raised". In other words, preferably, the switching is performed when the model current is greater than the designed current after 1) the designed current is compared with 2) the model current at present time.

Before the switching is performed, the voltage drop of the current source CS2 is greatly caused (substantially, "threshold voltage after the switching has been performed"-"threshold voltage before the switching is performed"). On contrast, after the switching has been performed, the voltage of the current source CS2 is dropped approximately to the saturation voltage Vsat.

Further, the model current may be found by using a multidimensional function in addition to the linear model. In addition, naturally, the model current may be found in a table of current- voltage measurement values of a real circuit (including a switch), which is previously stored in a memory.

The period from the time point P3a to less than the time point P4 is a period at which the first and second light emitting blocks 10 and 11 are turned on based on the second linear model 32.

The P4a is a time point at which the switching is performed so that one light emitting block is additionally turned on. In other words, at the time point P4a, the first to third light emitting blocks 10, 11, and 12 are turned on. The switching is performed in compliance with "switch control rule when the rectified voltage is raised" applied to the time point P3a.

A period from the time point P4a to a time point, at which the voltage phase becomes 90°, is a period in which the light emitting blocks are turned on based on the third linear model 33, which is the combination model of the first to third light emitting blocks 10 and 12, and the voltage drop is caused at the current source CS2 to adjust the voltage of the load so that the designed current 50A is supplied to the load. During the above period, since all light emitting blocks 10, 11, and 12 are turned on, the raising of the rectified voltage is terminated without an additional switching operation by the controller 4. During the period, as the time is increased, the voltage of the current source CS2 is continuously increased.

A period from the time point, at which the voltage phase becomes 90° to less than the time point P5a is a period in which the light emitting blocks are turned on based on the third linear model 33 which is the combination of the first to third light emitting blocks 10 to 12, and the voltage drop is caused at the current source CS2 to adjust the voltage of the load, so that the designed current 50A is supplied to the load. In this case, as the time is increased, the voltage drop of the current source CS2 is continuously decreased.

At the time point P5a, the switching is performed, so that one light emitting block is additionally turned off. In other words, at the time point P5a, the third light emitting block 12 is turned off, so that only the first and second light emitting blocks 10 and 11 are maintained in the turning-on state. The switching is performed in compliance with "switch control rule when the rectified voltage is dropped". In other words, the controller 4 preferably monitors the voltage at the output terminal of the current source CS2 to control the switch before the voltage at the output terminal is dropped to the saturated voltage Vsat or less, thereby additionally bypassing one light emitting block and removing the light emitting block from the circuit.

A period from the time point P5a to less than the time point P6a is a period in which the light emitting blocks are turned on based on the second linear model 32 which is the combination model of the first and second light emitting blocks 10 and 11. During the period, voltage drop is caused at the current source CS2 to adjust the voltage of the load, so that the designed current 50A is supplied to the load. In this case, as the time is increased, the voltage drop of the current source CS2 is continuously decreased.

The P6a is a time point at which the switching is performed, so that one light emitting block is additionally turned off. In other words, at the time point P6a, the second light emitting block 11 is turned off, so that only the first light emitting block 10 is turned on. The switching is performed in compliance with "switch control rule when the rectified voltage is dropped".

A period from the time point P6a to less than the time point P7a is a period in which the first light emitting block 10 is continuously turned on based on the first linear modle 31, and voltage drop is caused at the current source CS2 to adjust the voltage of the load, so that the designed current 50A is supplied to the load. In this case, as the time is increased, the voltage drop of the current source CS2 is continuously decreased. During the period, since only one light emitting block, that is, the first light emitting block 10 is turned on so that there is no a light emitting block to be bypassed, a present switch state is maintained until a next rectifying cycle starts via the time point P8a.

As described above, the case that the maximum rectified voltage is 125V has been described in detail.

When comparing with FIGS. 11 and 12, as AC voltage is increased, the time to start of the turning on the first light emitting block can be more advanced, the power factor can be more improved, and the time period of current flowing is more increased, so that the brightness of the light emitting blocks can be more increased.

Accordingly, if the AC input voltage is increased, the designed current is lowered, so that the brightness of the LED block is matched with the brightness of the LED block at the designed reference voltage. In this case, the brightness is constantly maintained, the power consumption is reduced, and the heat emitted from the light emitting blocks 10 to 12 and the current source CS1 is reduced, thereby protecting the light emitting blocks 10 to 12 and the current source CS1. Accordingly, preferably, the designed current of the current source CS1 is adjusted corresponding to the level of the AC input voltage.

Since the LED block is a resistive load, a current-voltage relationship is one-to-one correspondence relationship. Accordingly, the switching time points P3a to P6a may be represented based on switching voltage Vref in "switch control rule when the rectified voltage is raised" and "switch control rule when the rectified voltage is dropped". In other words, when the rectified voltage is compared with the switching voltage Vref that is previously known through the calculation operation so that the rectified voltage is raised or dropped through the switching voltage Vref, the switching is performed, so that the light emitting block is added or removed.

When the AC voltage is raised so that 1) the effective value of the desired current must be lowered, the switching voltage Vref is preferably changed to a lower value (if the current is lowered in the LED, voltage is lowered). In addition, since 2) the time of the AC voltage passes through the preset switching voltage Vref is more advanced (that is, even the instantaneous desired current is lowered), even if the effective value of the desired current is not lowered, the switching voltage Vref is preferably changed to a lower value. However, preferably, 3) the switching voltage Vref may not be changed when taking the cost-to-effect into consideration. Although this case represents lower light efficiency as compared with the light efficiency in the case that the switching voltage Vref is changed, this case naturally represents higher light efficiency as compared with the light efficiency in the related art.

In addition, preferably, when the rectified voltage is provided higher than the designed voltage (that is, when a large amount of voltage is applied at the current source, so that the power of the current source exceeds regulated power), the designed current is lowered to lower power consumption at the current source, thereby protecting the current source. Alternatively, since current and voltage are maximized nearby 90°, which is the phase of the rectified voltage, current consumption is maximized. Accordingly, the current of the current source CS2 is set approximately to "0" (for example, 1 mA or less), so that the load current is reduced, and the voltage of the load is maintained at the threshold voltage, thereby lowering the voltage of the current source CS2, so that the power consumption can be reduced.

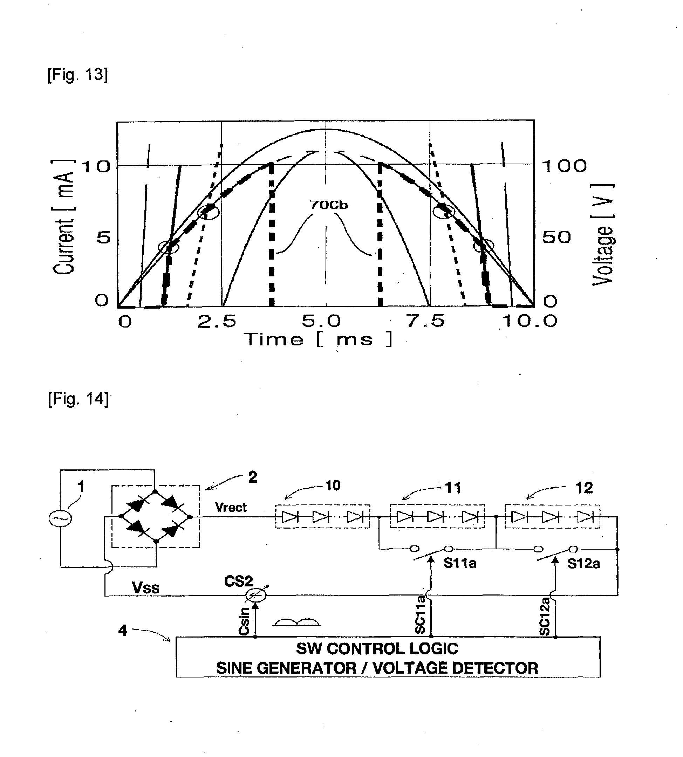

The above case is represented in a current waveform 70Cb of FIG. 13. Accordingly, the load is not affected by an over-voltage state, and a function to emit light, which is a basic function of a lighting apparatus, can be performed at the input voltage equal to or higher than the designed voltage.

According to the present embodiment, description has been made in that three light emitting blocks and two switches are provided. However, it will be understood to those skilled in the art that at least two light emitting blocks can be provided within the technical scope of the present invention.

If generalizing the case that one light emitting block is added as if three light emitting blocks are increased to four light emitting blocks, an $(n+1)^{th}$ light emitting block is inserted between an output terminal of the last $n^{th}$ light emitting block and the ground Vss, and an $(n+1)^{th}$ switch to be added is inserted between an input terminal of the last $(n+1)^{th}$ light emitting block and the input terminal of the current source.

FIG. 14 is a circuit diagram obtained by modifying the parallel-switch configuration of the circuit of FIG. 10 to a series-switch configuration.

Regarding the characteristic of the switch arrangement shown in FIG. 14, the second light emitting block 11 is connected to a first switch S11a in parallel, and the third light emitting block 12 is connected to a second switch S 12a in parallel. In addition, the first to third light emitting blocks 10, 11, and 12 are connected in series.

If generalizing the case that one light emitting block is added as if three light emitting blocks are increased to four light emitting blocks, after an $(n+1)^{th}$ light emitting block and an $(n+1)^{th}$ switch to be added are connected to each other in parallel, the $(n+1)^{th}$ light emitting block and the $(n+1)^{th}$ switch may be inserted between an output terminal of an $n^{th}$ last light emitting block and an input terminal of the current source. Since the circuit shown in FIG. 14 has the same determination criterion for a switch operation as that of the circuit of FIG. 9 except for the switch state, the details thereof will be omitted for clarity in the present specification.

As described above, the second embodiment of the present invention has been described in detail. Naturally, the rectifying circuit, the current source, the controller, and the switch, which have been described according to the present embodiment in detail, can be manufactured in one semiconductor device.

Embodiment 3

The present embodiment is modified by improving the above-described second embodiment. In other words, according to the second embodiment, an LED block 970 serving as a load is divided into a plurality of sub-light emitting blocks, and all sub-light emitting blocks are connected in series. Accordingly, a small number of sub-light emitting blocks are driven at the low instantaneous rectified input voltage, and a large number of sub-light emitting blocks are driven at the high instantaneous rectified input voltage, so that the whole turning-on time can be increased. Furthermore, according to the third embodiment, the order of turning on the light emitting blocks is adjusted, so that the difference in the brightness between the light emitting blocks can be minimized.

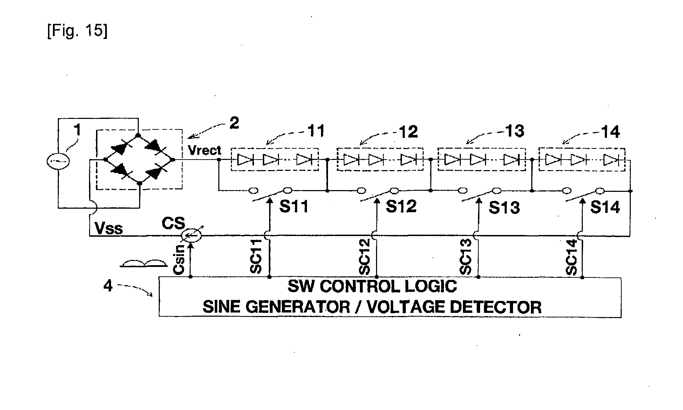

Hereinafter, an AC- driven LED lighting apparatus according to the third embodiment of the present invention will be described in detail with reference to FIGS. 15 to 19.

FIG. 15 is a circuit diagram showing one example of a circuit suitable for the present invention.

Hereinafter, a circuit configuration will be described with reference to FIG. 15. The circuit includes an AC power supply 1, a rectifying circuit 2, a load including first to fourth light emitting blocks 11 to 14, a series- switch block including first to fourth switches S11 to S14 to bypass current flowing through each light emitting block, a current source CS, and a controller 4.

The first to fourth light emitting blocks 11 to 14 and the current source CS are connected in series. The first switch S 11 is connected to the first light emitting block 11 in parallel. The second switch S12 is connected to the second light emitting block 12 in parallel. The third switch S 13 is connected to the third light emitting block 13 in parallel. The fourth switch S14 is connected to the fourth light emitting block 14 in parallel.

Preferably, the first to fourth light emitting blocks 11 to 14 include at least one LED or a plurality of LEDs may be arranged in a series- connection configuration, a parallel- connection configuration, or a series/ parallel- connection configuration. Since the first to fourth light emitting blocks 11 to 14 are generally known to those skilled in the art, the details thereof will be omitted below for clarity.

In addition, preferably, since the controller 4 operates based on the same concept as that of the second embodiment, the details thereof will be omitted below for clarity.

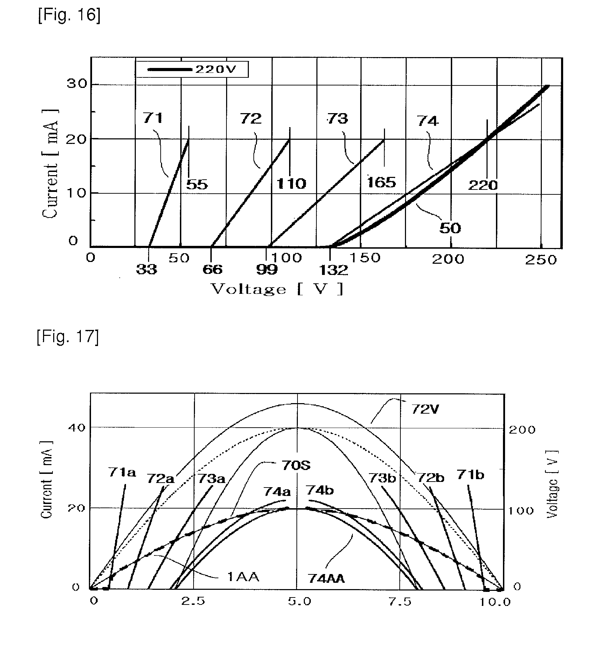

Hereinafter, the characteristic of the light emitting block according to the present embodiment will be described with reference to FIG. 16.

First, a voltage- current characteristic curve 50 represents a voltage- current characteristic curve of AX3220 which is fabricated in SEOUL SEMICONDUCTOR CO., Ltd. and includes a plurality of LEDs connected in series. The characteristic curve 50 according to the present embodiment corresponds to the case that the first to fourth light emitting blocks 11 to 14 are connected in series. In this case, naturally, the first to fourth switches S11 to S 14 shown in FIG. 15 must be disconnected.

In addition, a fourth linear model 74 is obtained by linearly modeling the voltage-current characteristic curve 50 through a simple scheme, and occupies the duration of the rectified voltage Vrect in the range of 0V to 220V. It can be recognized from the fourth linear model 74 shown in FIG. 16 that current is 0mA at the voltage of 132V, and 20mA at the voltage of 220V.

In addition, the first linear model 71 is obtained by dividing the light emitting block 970 according to the related art into four equal parts and then turning on only one light emitting block among the four equal parts. Since equivalent series resistance of the first linear model 71 corresponds to 1/4 of the equivalent series resistance according to the related art, the threshold voltage becomes 33V which is 1/4 of the threshold voltage of the fourth linear model 74, and the voltage representing the current of 20mA becomes 55V which is 1/4 of the voltage of the fourth linear model 74. Therefore, if the case, in which the light emitting block 970 according to the related art is divided into four equal parts and one light emitting block is turned on, is linearly modeled, the first linear model 71 is obtained.

In this case, one turned-on light emitting block may be one of the first to fourth light emitting blocks 11 to 14. This is realized by allowing the switch, which controls the number of series-connected light emitting blocks, to turn off (disconnect) only a switch connected to the turned-on light emitting block in parallel, and to conduct remaining switches connected to the turned-off light emitting blocks in parallel.

In addition, a second linear model 72 is obtained by modeling the case that the light emitting block 970 according to the related art is divided into four equal parts, and two light emitting blocks among the four equal parts are connected to in series. Since the equivalent series resistance of the second linear model 72 becomes 2/4 of the equivalent series resistance according to the related art, the threshold voltage becomes 66V which is 2/4 of the threshold voltage of the fourth linear model 74, and the voltage representing current of 20mA becomes 110V which is 2/4 of the fourth linear model 74. Therefore, if the case, in which the light emitting block 970 is divided into four equal parts and two light emitting blocks are connected in series, is linearly modeled, the second linear model 72 is obtained.

In this case, the second linear model 72 to turn on two light emitting blocks may relate to the series-connection between the first and second light emitting blocks 11 and 12, or may relate to the series-connection between the first and third light emitting blocks 11 and 13. In other words, if the above case is generally expressed, the second linear model 72 is a model corresponding to the case that two of four light emitting blocks are selectively turned on. In this case, all switches connected to the turned-on light emitting blocks in parallel are turned off, and all switches connected to the remaining turned-off light emitting blocks in parallel are conducted.

In addition, a third linear model 73 is obtained by modeling the case that the light emitting block 970 according to the related art is divided into four equal parts, and three light emitting blocks among the four equal parts are connected in series. Since the equivalent series resistance of the third linear model 73 becomes 3/4 of the equivalent series resistance according to the related art, the threshold voltage becomes 99V which is 3/4 of the fourth linear model 74, and the voltage representing current of 20mA becomes 165V which is 3/4 of the fourth linear model 74. Therefore, if the case, in which the light emitting block 970 according to the related art is divided into four equal parts and three light emitting blocks are connected in series, is linearly modeled, the third linear model 73 is obtained.

In other words, if the third linear model 73 to turn on three light emitting blocks is generally expressed, the third linear model 73 is a model corresponding to the case that three of four light emitting blocks are selectively turned on. In this case, all switches connected to the turned-on light emitting blocks in parallel are turned off, and all switches connected to the remaining turned-off light emitting blocks in parallel are conducted.

Hereinafter, description will be made with reference to FIG. 17.

FIG. 17 illustrates the case that the first to fourth linear models 71 to 74 are used, the power frequency is 50Hz, and the maximum rectified voltage is 230V in the circuit of FIG. 15.

The rectified voltage Vrect is represented in a voltage waveform 72V. In addition, linear model currents 71 a and 71 b represent load current for the rectified voltage 72V by using the first linear model 71, and linear model currents 72a and 72b represent load current for the rectified voltage 72V by using the second linear model 72. In addition, linear model currents 73a and 73b represent load current for the rectified voltage 72V by using the third linear model 73, and linear model currents represent load current for the rectified voltage 72V by using the fourth linear model 74.

A sinusoidal designed current provided to the current source CS is represented in the waveform 70S (black dotted line) in which the maximum instantaneous current is 20mA. When the switches are properly adjusted by the controller 4, the rectified current is represented in the waveform 1AA (red dotted line).

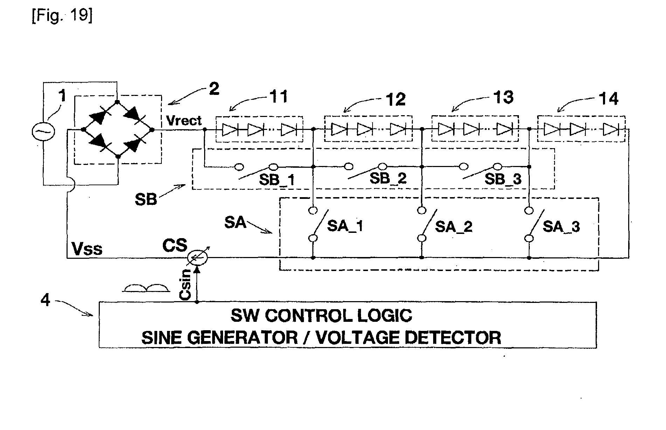

Hereinafter, the desirable operation of the circuit of FIG. 15 to obtain the rectified current waveform 1AA (red dotted line) of FIG. 19 will be described in the sequence of increasing the rectified voltage in the range of 0° to 90°.

The switch block is set to turn on one light emitting block from a time point in which the phase of the rectified voltage becomes 0°, to a time point P1 which is a interconnection between the designed current 70S (black dotted line) and the linear model current 71 a. In this case, since the linear model current 71a lower than the designed current 70S flows, the voltage of the current source CS is formed to the minimum of voltage (saturation voltage of the current source), so that the linear model current 71a flows through the load.

The switch block is set in such a manner that one light emitting blocks is continuously turned on from the time point P1 which is the interconnection between the designed current 70S (black dotted line) and the linear model current 71a, to a time point P2 which is a interconnection between the designed current 70S and the linear model current 72a.

In this case, since the linear model current 71 a higher than the designed current 70S flows, the voltage drop is caused at the current source CS to adjust the voltage of one light emitting block, so that the load current is matched with the designed current 70S. During the above period, one of the first to fourth light emitting blocks 11 to 14 can be continuously turned on (hereinafter, "one- stage- continuous- turn- on- scheme") .

However, according to the one- stage- continuous- turn- on- scheme, a user may recognize the difference in brightness between the light emitting block, which is continuously tuned off, and the light emitting block which is continuously turned on. Accordingly, preferably, one light emitting block is alternately turned on once by rapidly alternating all light emitting blocks, so that the user can recognize that all light emitting blocks have the same brightness (hereinafter, "one- stage- alternation- turn- on- scheme") .

The switch block is set in such a manner that two light emitting blocks are continuously turned on from the time point P2 which is the interconnection between the designed current 70S (black dotted line) and the linear model current 72a, to a time point P3 which is a interconnection between the designed current 70S and the linear model current 73a. In this case, since the linear model current 72a higher than the designed current 70S flows, the voltage drop is caused at the current source CS to reduce the voltage of the two light emitting blocks through adjustment, so that the load current is matched with the designed current 70S. During the above period, two of the first to fourth light emitting blocks 11 to 14 can be continuously turned on (hereinafter, "two- stage- continuous- turn- on- scheme") .

However, according to the two- stage- continuous- turn- on- scheme, a user may recognize the difference in brightness between the light emitting block, which is continuously tuned off, and the light emitting block which is continuously turned on. Accordingly, preferably, both of two light emitting blocks are alternately turned on once by rapidly alternating all light emitting blocks, so that the user can recognize that all light emitting block have the same brightness (hereinafter, "two- stage- alternation- turn- on- scheme") .

The switch block is set in such a manner that three light emitting blocks are continuously turned on from the time point P3 which is the interconnection between the designed current 70S (black dotted line) and the linear model current 73a, to a time point P4 which is a interconnection between the designed current 70S and the linear model current 74a. In this case, since the linear model current 73a higher than the designed current 70S flows, the voltage drop is caused at the current source CS to reduce the voltage of the three light emitting blocks is reduced, so that the load current is matched with the designed current 70S. During the above period, three of the first to fourth light emitting blocks 11 to 14 can be continuously turned on (hereinafter, "three- stage- continuous- turn- on- scheme") .

However, according to the three- stage- continuous- turn- on- scheme, a user may recognize the difference in brightness between the light emitting block, which is continuously tuned off, and the light emitting block which is continuously turned on. Accordingly, preferably, three light emitting blocks are alternately turned on once by rapidly alternating all light emitting blocks, so that the user can recognize that all light emitting blocks have the same brightness (hereinafter, "three- stage- alternation- turn- on- scheme") .

The switch block is set in such a manner that four light emitting blocks are turned on from the time point P4 which is the interconnection P4 between the designed current 70S (black dotted line) and the linear model current 74a, to a time point at which the phase of the rectified voltage becomes 90°. In this case, since the linear model current 74a higher than the designed current 70S flows, the voltage drop is caused at the current source CS. Accordingly, the voltage of the four light emitting blocks is reduced so that the load current is matched with the designed current 70S. During the above period, all of the first to fourth light emitting blocks 11 to 14 can be continuously turned on (hereinafter, "four- stage- continuous- turn- on- scheme") .

As described above, "one- stage- alternation- turn- on- scheme" to "three- stage- alternation- turn- on- scheme" and "first- stage- continuous- turn- on- scheme" to "four- stage- continuous- turn- on- scheme" have been described. If the above case is generally expressed with respect to n light emitting blocks, it may be called "n- stage- alternation- turn- on- scheme" and "n- stage- continuous- turn- on" scheme) . In this case, n is a natural number larger than 2, and the size thereof is not limited naturally.

Hereinafter, a "fixed- sequence- turn- on- scheme" in which each- stage- continuous- turn- on- scheme is performed in the fixed sequence will be described by using Table 3.

[Table 3]

| Fixed-sequence-turn-on-scheme | | | | |
|---|---|---|---|---|
| Rectification Cycle | One stage is continuously turned on. | Two stages are continuously turned on. | Three stages are continuously turned on. | Four stages are continuously turned on. |
| First Cycle | 11 | 11,12 | 11,12, 13 | 11,12,13, 14 |
| Second Cycle | 11 | 11,12 | 11,12, 13 | 11,12,13, 14 |
| Third Cycle | 11 | 11,12 | 11,12, 13 | 11,12,13, 14 |
| Fourth Cycle | 11 | 11,12 | 11,12, 13 | 11,12,13, 14 |

In Table 3, 11 represents the first light emitting block, 12 represents the second light emitting block, 13 represents the third light emitting block, and 14 represents the fourth light emitting block.

At every rectification cycle, the "one- stage- continuous- turn- on- scheme" allows the first light emitting block 11 to be turned on, the "two- stage- continuous- turn- on- scheme" allows the first and second light emitting blocks 11 and 12 to be turned on, the "three- stage- continuous- turn- on- scheme" allows the first to third light emitting blocks 11 to 13 to be turned on, and the "four- stage- continuous- turn- on- scheme" allows the first to fourth light emitting blocks 11 to 14 to be turned on.

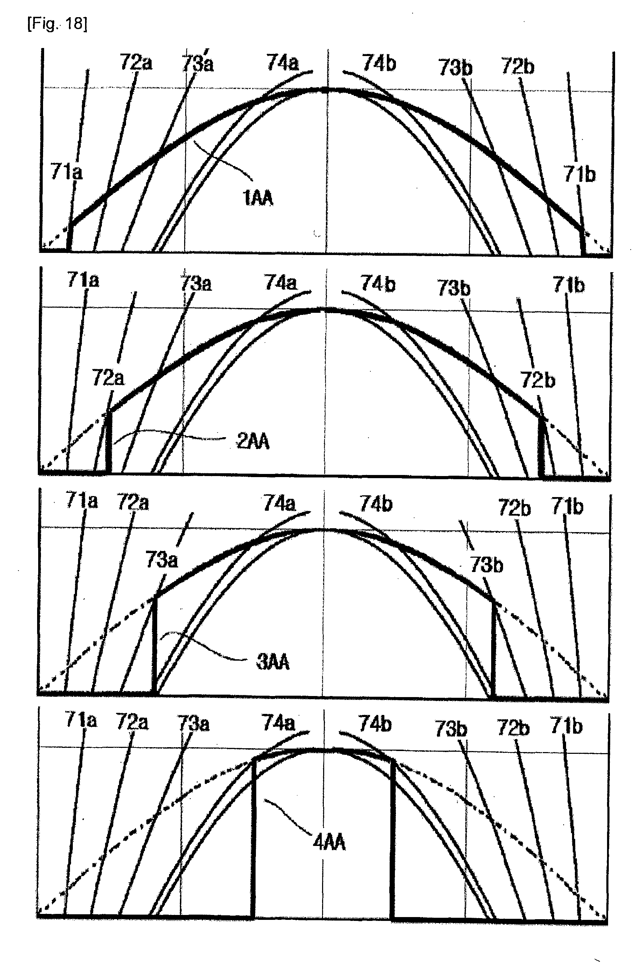

Hereinafter, the current flowing through the light emitting blocks 11 to 14 observed at the first cycle of the rectified voltage will be described with reference to FIG. 18. The largest quantity of current flows through the first light emitting block 11 as compared with other light emitting blocks 12 to 14 as shown in the waveform 1AA. As shown in the waveform 2AA, the quantity of current flowing through the second light emitting block 12 is smaller than the quantity of current flowing through the first light emitting block 11. As shown in the waveform 3AA, the quantity of current flowing through the third light emitting block 13 is smaller than the quantity of current flowing through the second light emitting block 12. As shown in the waveform 4AA, the smallest quantity of current flows through the fourth light emitting block 14.

In other words, according to the "fixed- sequence- turn- on- scheme", since different current flows through each light emitting block, the difference in brightness between the light emitting blocks may be made. In other words, the light emitting block having a larger quantity of current flowing therethrough may have a shorter lifespan than that of the light emitting block having a smaller quantity of current flowing therethrough.

Hereinafter, a "reverse- circulation- turn- on- scheme" capable of reducing the difference in brightness between the light emitting blocks will be described by using Table 4.

[Table 4]

| Reverse-circulation-turn-on-scheme | | | | |
|---|---|---|---|---|
| Rectification Cycle | One stage is continuously turned on. | Two stages are continuously turned on. | Three stages are continuously turned on. | Four stages are continuously turned on. |
| First Cycle | 11 | 11,12 | 11,12, 13 | 11,12, 13, 14 |
| Second Cycle | 14 | 13,14 | 12,13,14 | 11,12, 13,14 |
| Third Cycle | 11 | 11,12 | 11,12, 13 | 11,12, 13, 14 |
| Fourth Cycle | 14 | 13,14 | 12,13,14 | 11,12, 13, 14 |

In this case, 11 represents the first light emitting block, 12 represents the second light emitting block, 13 represents the third light emitting block, and 14 represents the fourth light emitting block.

At the odd- numbered rectification cycle, a "first- continuous- turn- on- scheme of light emitting block with lower number" is performed in which the light emitting block having a lower number is turned on by priority in the order of the fourth light emitting block 14 from the first light emitting block 11. In other words, the "one- stage- continuous- turn- on- scheme" allows the first light emitting block 11 to be turned on, the "two- stage- continuous- turn- on- scheme" allows the first and second light emitting blocks 11 and 12 to be turned on, and the "three- stage- continuous- turn- on- scheme" allows the first to third light emitting blocks 11 to 13 to be turned on. The "four- stage- continuous- turn- on- scheme" allows all light emitting blocks to be turned on in which the light emitting blocks having lower numbers (from the left in drawings) are continuously turned on by priority.

At the even- numbered rectification cycle, a "first- continuous- turn- on- scheme of light emitting block with higher number" in which the light emitting block having a higher number is turned on by priority in the order of the first light emitting block 11 from the fourth light emitting block 14. In other words, the "one- stage- continuous- turn- on- scheme" allows the fourth light emitting block 14 to be turned on, the "two- stage- continuous- turn- on- scheme" allows the fourth and third light emitting blocks 14 and 13 to be turned on, and the "three- stage- continuous- turn- on- scheme" allows the fourth to second light emitting blocks 14 to 12 to be turned on. The "four- stage- continuous- turn- on- scheme" allows all light emitting blocks to be turned on in which the light emitting blocks having the higher number (from the right in drawings) are continuously turned on by priority.

As described above, the "reverse- circulation- turn- on- scheme", in which the "first- continuous- turn- on- scheme of light emitting block with higher number" and "first- continuous- turn- on- scheme of light emitting block with lower number" are alternately performed, is employed to compare with the "fixed- sequence- turn- on- scheme". In this case, according to the "reverse- circulation- turn- on- scheme", current more uniformly flows as compared with the "fixed- sequence- turn- on- scheme", so that 1) relatively constant light is emitted from each light emitting block, and 2) the lifespan of each light emitting block is more increased.

FIG. 19 is a circuit diagram showing another example of a circuit suitable for the "reverse- circulation- turn- on- scheme".

The greatest feature in the circuit configuration in which a switch to bypass current flowing through the light emitting blocks includes both of a switch block SB having a series-connection configuration and a switch block SA having a parallel-connection configuration.

Regarding the desirable operation of the circuit shown in FIG. 19, 1) the "continuous- turn- on- scheme", in which a light emitting block having a lower number (that is, the left in drawings) is turned on by priority, is performed at the odd- numbered rectification cycle. To this end, the entire switch block SB having the series- connection configuration is turned off, and the turning- on operation is performed through the switch block SA having the parallel- connection configuration. 2) the "continuous- turn- on- scheme" in which a light emitting block having a higher number (that is, the right in drawings) is turned on by priority at the even- numbered rectification cycle. To this end, the entire switch block SA having the parallel- connection configuration is turned off, and the turning- on operation is performed through the switch block SB having the series- connection configuration

Regarding the advantages of the circuit, when the switch is constructed by using semiconductor devices, even if the difference in the feature between the semiconductor devices is slightly made, the circuit can be exactly operated.

In more detail, when the "continuous- turn- on- scheme" is performed from the light emitting blocks having the lower number (from the left in drawings) by priority through the series switch block SB, a switch having a lower number is disconnected by priority in the state that all switches are conducted.

For example, if the second switch SB_2 is disconnected, so that the second light emitting block is turned on, two paths allowing the current to pass through the second light emitting block exist. Theoretically, all currents must flow through the third switch SB_3. Actually, Depend on the quality of the third switch SB_3, a large quantity of current may flow (if the switch is perfectly conducted), or a small quantity of current may flow (if the switch is partially conducted).

In order to describe the above case in more detail, a case that the switch includes PNP transistors will be described below. When the transistors are conducted, a base current (driving current) is necessarily required. When the transistors are not conducted, since the base current is zero, the base current is not required. In other words, all switches subject to series-connection can be completely turned off. However, all switches may be conducted or may not be conducted according to the quantity of current (the quantity of instantaneous designed current) (that is, the case that the instantaneous designed current is smaller than the switch driving current).

When the "first- continuous- turn- on- scheme of light emitting block with lower number" is performed from the light emitting block having a lower number (that is, the left in drawings) by using the switch block SA having the parallel-connection configuration, only a switch to control a light emitting block to be additionally turned on must be exactly conducted, and all remaining switches may be turned off. In other words, even if the difference in characteristic between the semiconductor devices is slightly made, the circuit exactly operates.

In addition, it is natural for those skilled in the art to understand that a parallel- connected switch block SC (not shown) is configured, and the "first- continuous- turn- on- scheme of light emitting block with higher number" is performed from a light emitting block with a higher number (that is, from the right in drawings) by priority according to the above concept (that is, only one switch is conducted, but all remaining switches are disconnected) .

Since the internal detailed operations of the series-connected switch block SB and the parallel-connected switch block SA have been described with reference to FIG. 9 (parallel-connected switch block) and FIG. 15 (series-connation switch block), the details thereof will be omitted for clarity.

As described above, the "reverse- circulation- turn- on- scheme", in which the "first- continuous- turn- on- scheme of light emitting block with lower number" is performed at the odd- numbered rectification cycle, and the "first- continuous- turn- on- scheme of light emitting block with higher number" is performed at the even- numbered rectification cycle, has been described with respect to the rectification cycle with reference to table 4 and FIG. 19.

Meanwhile, in the circuit of FIG. 19, a turning- on operation may be performed at a cycle (preferably, cycle shorter than the rectification cycle; hereinafter, "alternation cycle") instead of the rectification cycle. In other words, the performing of the "first- continuous- turn- on- scheme of light emitting block with lower number" by using the switch block SA at the odd- numbered alternation cycle, and the performing of the "first- continuous- turn- on- scheme of light emitting block with higher number" by using the switch block SB at the even- numbered alternation cycle may be embodiments of the above- described "alternation- turn- on- scheme". In this case, the period between alternation cycles is preferably shorter than the period in which a user can recognize the difference in brightness between a turned- on light emitting block and a turned- off light emitting block. The period may have various values.

Hereinafter, a "ring- circulation- turn- on- scheme" to reduce the difference in brightness between the light emitting blocks will be described by using Table 5.

According to the "ring- circulation- turn- on- scheme", a light emitting block, which has been driven through the "one- stage- continuous- turn- on- scheme" at the previous rectification cycle is left- rotated (Rotate Left), so that the light emitting block is shifted to the back of the last light emitting block (see second to fourth cycles of Table 5) . Then, light emitting blocks, which newly participate in a two- stage- continuous- turn- on- operation at the previous rectification cycle, are driven through the "one- stage- continuous- turn- on- scheme" at a present cycle. Alternatively, a Rotate Right scheme is employed, so that the last light emitting block may be shifted to  the position of the first light emitting block.

[Table 5]

| Ring-circulation-turn-on-scheme | | | | |
|---|---|---|---|---|
| Rectification Cycle | One stage is continuously turned on. | Two stages are continuously turned on. | Three stages are continuously turned on. | Four stages are continuously turned on. |
| first Cycle | 11 | 11,12 | 11,12, 13 | 11,12, 13,14 |
| Second Cycle | 12 | 12,13 | 12,13,14 | 12, 13, 14, 11 |

(continued)

| Ring-circulation-turn-on-scheme | | | | |
| --- | --- | --- | --- | --- |
| Rectification Cycle | One stage is continuously turned on. | Two stages are continuously turned on. | Three stages are continuously turned on. | Four stages are continuously turned on. |
| Third Cycle | 13 | 13,14 | 13,14,11 | 13, 14,11,12 |
| Fourth Cycle | 14 | 14,11 | 14,11,12 | 14,11,12, 13 |

In Table 5, 11 represents the first light emitting block, 12 represents the second light emitting block, 13 represents the third light emitting block, and 14 represents the fourth light emitting block.

At the first rectification cycle in Table 5, the "first- continuous- turn- on- scheme of light emitting block with lower number", in which the first light emitting block 11 is driven through the "one- stage- continuous- turn- on- scheme", is applied.

In addition, at the second rectification cycle, the light emitting block (that is, the first light emitting block 11) which was driven through the "one- stage- continuous- turn- on- scheme" at the previous cycle is circularly left- rotated and shifted to the back of the last light emitting block (that is, the fourth light emitting block 14), so that the light emitting block to be driven through the "one- stage- continuous- turn- on- scheme" becomes the second light emitting block 12.

In addition, at the third rectification cycle, the light emitting block (that is, the second light emitting block 12) which was driven through the "one- stage- continuous- turn- on- scheme" at the previous cycle is circularly left- rotated and shifted to the back of the last light emitting block (that is, the first light emitting block 11), so that the light emitting block to be driven through the "one- stage- continuous- turn- on- scheme" becomes the third light emitting block 13.

In addition, at the fourth rectification cycle, the light emitting block (that is, the third light emitting block 13) which was driven through the "one- stage- continuous- turn- on- scheme" at the previous cycle is circularly left- rotated and shifted to the back of the last light emitting block (that is, the second light emitting block 12), so that the light emitting block to be driven through the "one- stage- continuous- turn- on- scheme" becomes the fourth light emitting block 14.

Regarding of the summery of the core concept according to the present embodiment again, 1) a light emitting block serving as a load is divided into a plurality of sub-light emitting blocks, 2) a small number of sub-light emitting blocks is turned on at low rectified voltage, and a large number of sub-light emitting blocks are turned on at high rectified voltage, so that light emission efficiency is enhanced, and 3) the sequence of turning on the sub-light emitting blocks is adjusted, so that the difference in brightness between the light emitting blocks can be reduced.

Although the scheme of adjusting the sequence of turning on the sub-light emitting blocks has been described in detail by proving examples, various schemes can be naturally employed. In addition, the concept of the present invention applied to a scheme of reducing the brightness difference is naturally effective even when the desired current source is not employed.

The present embodiment has been described in that four light emitting blocks and four switches are provided and shown in drawings. However, it can be apparently understood to those skilled in the art that the technical spirit of the present invention can be realized through the embodiment including at least two light emitting blocks.

If generalizing the case that one light emitting block is added as if four light emitting blocks are increased to five light emitting blocks, after an $(n+1)^{th}$ light emitting block and an $(n+1)^{th}$ switch to be added are connected to each other in parallel, the $(n+1)^{th}$ light emitting block and the $(n+1)^{th}$ switch may be inserted between an output terminal of an $n^{th}$ last light emitting block and an input terminal of the current source.

In addition, according to the present embodiment, although light emitting blocks are linearly modeled, the light emitting blocks may be modeled by using a multidimensional function. Naturally, the light emitting blocks may be modeled in a table of current-voltage measurement values of a real circuit (including a switch), which is previously stored in a memory.

As described above, the embodiment of the present invention has been described in detail. Naturally, the rectifying circuit, the current source, the controller, and the switch, which have been described according to the present embodiment in detail, can be manufactured in one semiconductor device.

[Industrial Applicability]

According to the present invention, an AC-driven LED lighting apparatus which can constantly maintain the brightness of light by turning on LED blocks using constant current regardless of the intensity of AC input voltage, can reduce power consumption by preventing overcurrent from being supplied, and can increase the lifespan of an LED lighting apparatus by reducing heat emitted from the LED lighting apparatus. Therefore, the present invention has significant industrial applicability.

**Claims**

1. An AC-driven LED lighting apparatusincluding a rectifying circuit to rectify an AC voltage to convert the AC voltage into a DC rectified voltage, a load including a plurality of LED blocks, which receives a current from the rectifying circuit,are connected to in series, and individually include at least one LED, a current source to adjust a current supplied to the LED blocks, a controller to calculate a sinusoidal designed current value based on the AC voltage, to provide the calculated designed current value to the current source, and to perform a control operation to supply only the designed value to the LED blocks by adjusting voltage drop caused at the current source if the current supplied to the LED blocks is greater than the designed current value, anda switch block including at least one switch connected to the LED blocks in series or in parallel and adjusting a number of the series-connected LED blocks to be turned on by changing flow of current flowing through the series-connected LED blocks through an on/off operation of the switch,**characterized in that**
the controller calculates the sinusoidal designed current value by using a sinusoidal signal in phase with the AC voltage,
the current source controlled by the controller supplies all of the current supplied to the LED blocks to the LED blocks without the voltage drop caused at the current source if the current supplied to the LED blocks is smaller than the designed current value, and
the controller calculates a supply current for an instantaneous AC voltage according to the number of the series-connected LED blocks by modeling the supply current at a time when the instantaneous AC voltage is supplied to both terminals of the LED blocks, and controls the switch block to allow the calculated modeling current value to be greater than an instantaneous designed current at a present phase of the AC voltage while turning on the LED blocks as many as possible.

2. The AC-driven LED lighting apparatus of claim 1, wherein the controller controls the switch block to alternately turn on the LED blocks as required among the plural LED blocks.

3. The AC-driven LED lighting apparatus of claim 1, wherein the controller controls the switch block to turn on the LED blocks in a sequence from the LED blocks provided at one side to the LED blocks provided at an opposite side in an odd-numbered rectification cycle of rectification input supplied to the LED blocks, and to turn on the LED blocks in a sequence from the LED blocks provided at the opposite side to the LED blocks provided at the one side, which is reverse to the sequence set at the odd-numbered rectification cycle, in an even-numbered rectification cycle of the rectification input.

4. The AC-driven LED lighting apparatus of claim 1, wherein the controller controls the switch block to set the LED block, which is turned on at a previous rectification cycle of rectification input supplied to the LED blocks, to a last LED block (Rotate Left) and turn on the LED blocks in a sequence set through the Rotate Left at a next rectification cycle, or controls the switch block to set the LED block, which is lastly turned on at the previous rectification cycle of the rectification input supplied to the LED blocks, to a first LED block (Rotate Right) and turn on the LED blocks in a sequence set through the Rotate Right at the next rectification cycle.

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

[Fig. 11]

[Fig. 12]

[Fig. 13]

[Fig. 14]

[Fig. 15]

[Fig. 16]

[Fig. 17]

[Fig. 18]

[Fig. 19]